# EUROPÄISCHE PATENTSCHRIFT

(11) **EP 2 765 344 B1**
(45) Veröffentlichungstag und Bekanntmachung des Hinweises auf die Patenterteilung: **17.06.2015**
(21) Anmeldenummer: 13000696.8
(22) Anmeldetag: 09.02.2013
(51) Int. Cl.: F16L 37/084, F16L 37/23, F16L 37/34

(54) **Kupplungseinheit**
Coupling unit
Unité de couplage

(43) Veröffentlichungstag der Anmeldung: 13.08.2014
(73) Patentinhaber: Völker, Manfred, 63825 Blankenbach (DE)
(72) Erfinder: Völker, Manfred, 63825 Blankenbach (DE)
(74) Vertreter: Flosdorff, Jürgen

(56) Entgegenhaltungen:
- EP-B1- 2 334 968
- DE-U1- 9 412 445
- FR-A1- 2 952 693
- US-A- 5 176 406

## Beschreibung

Die Erfindung betrifft eine Kupplungseinheit einer Anordnung zum Abzweigen einer Flüssigkeit aus einem Rohr oder aus einer stationären Einheit oder zum Zuführen bzw. zur Entnahme einer Flüssigkeit aus einer flexiblen Schlauchverbindung in ein Rohr oder in eine stationäre Einheit. Die Kupplungseinheit besteht aus einem Nippelteil und einem Kupplungsteil, wobei eines dieser Teile mit einem Abschnitt in einem Rohr oder in einer stationären Einheit befestigt ist und wobei in dem Nippelteil und dem Kupplungsteil jeweils ein von einer Feder in die VerschlussStellung vorgespannter Ventilkörper verschieblich gehalten ist. Das Nippelteil ist aus einem Nippelelement und einem eingesteckten Verschluss-Stück und das Kupplungsteil aus einem Kupplungselement und einem eingesteckten weiteren Verschluss-Stück zusammengesetzt, wobei die zusammengehörenden Teile miteinander verrastet sind, so dass deren axialer Zusammenhalt fixiert ist. Dabei ist jeweils ein O-Dichtungsring zwischen den eingesteckten Verschluss-Stücken und dem Nippelelement bzw. dem Kupplungselement angeordnet, um die Dichtigkeit der Kupplungseinheit zu gewährleisten. Die Verschluss-Stücke, das Nippelelement und das Kupplungselement bestehen aus einem Kunststoff wie PP, PVDF oder vergleichbaren Polymeren oder auch glasfaserverstärkten Polymeren und sind bevorzugt im Spritzgussverfahren hergestellt.

Eine derartige Kupplungseinheit ist in dem europäischen Patent EP 2 334 968 B1 offenbart. Bei dieser Kupplungseinheit ist an jedem Verschluss-Stück, dem Nippelelement und dem Kupplungselement jeweils wenigstens ein ringförmiger radialer Vorsprung und an dem anderen zugehörigen Teil eine Ringnut ausgebildet, die im vollständig eingesteckten Zustand der Teile ineinander einrasten. Hierbei entsteht zwar ein sicherer axialer Zusammenhalt der beiden Teile des Nippelteils und des Kupplungsteils, jedoch können die Verschluss-Stücke in dem Nippelelement und dem Kupplungselement beim Zusammenstecken schlecht positioniert werden, so dass keine präzise O-Dichtungspressung gewährleistet ist.

Der vorliegenden Erfindung liegt die Aufgabe zugrunde, eine Kupplungseinheit der betrachteten Art anzugeben, bei der eine sichere Abdichtung in dem Nippelteil und dem Kupplungsteil erreicht ist.

Die Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass an dem Außenumfang der Verschluss-Stücke und an dem Innenumfang des Kupplungselements und des Nippelelements in Umfangsrichtung verlaufende bevorzugt lamellenartige, querschnittlich bevorzugt dachförmige oder sägezahnförmige Vorsprünge, deren Spitzen auch gerundet sein können, ausgebildet sind, die sich um einen Teil des gesamten Umfangs der Verschluss-Stücke und des diese aufnehmenden Innenraums des Kupplungselements und des Nippelelements erstrecken, wobei die Vorsprünge sich querschnittlich teilweise überdecken und beim Einsteckvorgang elastisch verformt werden und im wesentlichen formschlüssig hintereinander einrasten. Dabei können auch die Vorsprünge eines Teils, bevorzugt des Verschluss-Stücks, elastisch verformt werden und in Nuten des anderen Teils einrasten.

Wenigstens ein Umfangsabschnitt der Verschluss-Stücke, des Kupplungselementes und des Nippelelementes ist frei von den lamellenartigen dachförmigen oder sägezahnförmigen Vorsprüngen bzw. Nuten und statt dessen mit Führungsmitteln für einen verdrehsicheren Einsteckvorgang versehen. Die Abmessungen der Vorsprünge und das verwendete Kunststoffmaterial sind so gewählt, dass der Einsteckvorgang glatt ausführbar ist und dass danach ein sicherer axialer Zusammenhalt gewährleistet ist, der nur unter Aufbringung einer größeren Kraft gelöst werden kann. Die Querschnittsform der in Umfangsrichtung verlaufenden Vorsprünge bzw. Nuten ist nicht auf eine Dachform oder Sägezahnform beschränkt, sondern es kann jede zweckmäßige Form wie z.B. diejenige von Rastnasen vorgesehen sein.

Als Führungsmittel sind wenigstens eine axiale Vertiefung bzw. Nut und an dem anderen Teil wenigstens ein in die Nut passender Steg vorgesehen, wobei diese Führungsmittel die Verdrehsicherung beim Einsteckvorgang und im zusammengesteckten Zustand gewährleisten, indem der wenigstens eine Steg beidseitig (zweckmäßig mit geringem Spiel) den Vorsprüngen gegenüber liegt. Dabei kann ein einziger Steg vorgesehen sein, der dieselbe Breite wie die axiale Nut hat, es können aber auch mehrere schmale Stege nebeneinander vorgesehen sein, die insgesamt dieselbe Breite wie die Nut haben.

Es liegt im Rahmen der Erfindung, dass jeweils zwei oder mehr Führungsmittel ausgebildet sein können, wobei dann vorzugsweise zwei Nuten diametral gegenüberliegend ausgebildet sein sollten, was natürlich auch für die zugehörigen Stege des anderen Teils gilt.

Mit großem Vorteil wird ferner vorgeschlagen, dass der freie Endabschnitt der Verschluss-Stücke ohne Vorsprünge glatt ausgeführt ist und sich konisch nach vorne hin verengt, und dass der zugehörige Aufnahmeraum des Kupplungselementes und des Nippelelementes eine etwas kürzere konische Gegenfläche und eine anschließende erweitere, vorzugsweise zylindrische Kontur zur Aufnahme des O-Dichtungsrings aufweist. Der O-Dichtungsring hat dabei einen kleineren Außendurchmesser als die Rastvorsprünge. Hierdurch kann spritztechnisch mit einfachen Mitteln ein präziser O-Ringsitz hergestellt werden.

Durch die Führungsmittel werden die Verschluss-Stücke beim Einsteckvorgang genauestens in dem Kupplungselement und dem Nippelelement positioniert, so dass eine gleichmäßige, höchst präzise O-Ringpressung erreicht wird, die eine perfekte Abdichtung in dem Nippelteil und dem Kupplungsteil hervorruft.

Weitere Einzelheiten der Erfindung ergeben sich aus der nachfolgenden Beschreibung sowie anhand der Zeichnungen.

Dabei zeigen:
- Figur 1: eine Ausführungsform der erfindungsgemäßen Kupplungseinheit;
- Figur 2: eine perspektivische Innenansicht eines aufgeschnittenen Kupplungselements mit darin angeordnetem Ventilkörper und eine perspektivische Ansicht des zugehörigen Verschluss-Stücks;
- Figur 3: das Kupplungselement der Figur 2 mit aufgesetzter Schiebehülse und ein Verschluss-Stück ähnlich Figur 2, jedoch mit einem Befestigungsbund.

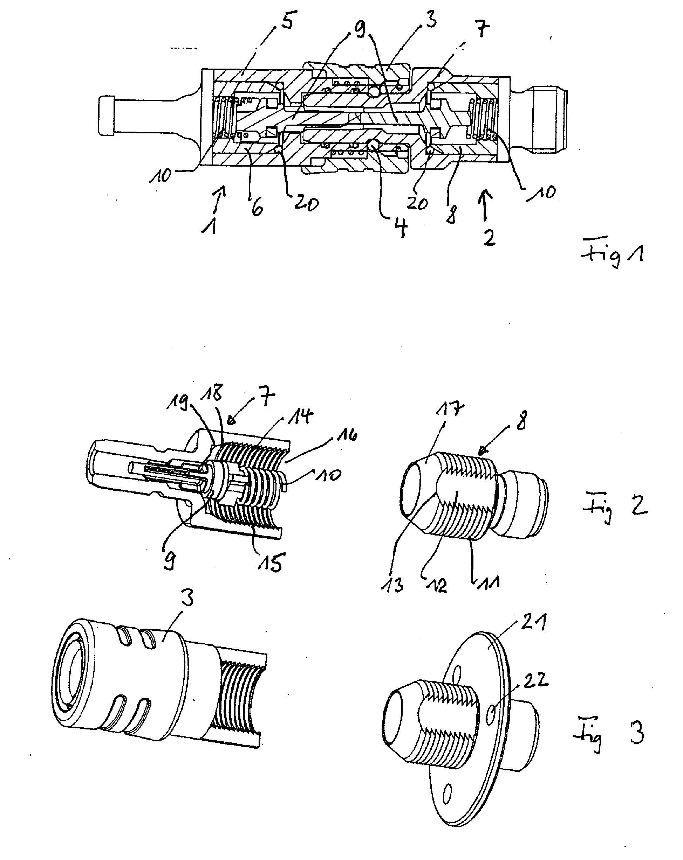

Figur 1 zeigt ein Nippelteil 1 und ein Kupplungsteil 2, die zu einer Kupplungseinheit zusammengesetzt sind. Die Verbindung der beiden Teile wird durch eine Schiebehülse 3 aufrecht gehalten, die Rastkugeln 4 in ihrer Rastposition hält. Diese Art der Verrastung eines Nippelteils mit einem Kupplungsteil ist beispielsweise aus dem europäischen Patent EP 2 334 968 B1 bekannt.

Das Nippelteil 1 enthält ein Nippelelement 5, in das ein Verschluss-Stück 6 eingesteckt ist, und das Kupplungsteil 2 enthält auf entsprechende Weise ein Kupplungselement 7, in das ein weiteres Verschluss-Stück 8 eingesteckt ist. In dem Nippelteil 1 und in dem Kupplungsteil 2 befindet sich jeweils ein Ventilkörper 9, der von einer Schraubenfeder 10 in die Verschluss-Stellung vorgespannt ist. Im dargestellten zusammengesetzten Zustand der Kupplungseinheit sind die beiden Ventilkörper 9 gegen die Kraft der Federn 10 in die Öffnungsstellung zurück gedrückt.

Wie Figur 2 zeigt, sind am Außenumfang des Verschluss-Stücks 8 lamellenartige Vorsprünge 11 ausgebildet, die in Umfangsrichtung verlaufen, wobei jedoch ein axialer Bereich 12 frei von Vorsprüngen 11 ist. Dieser axiale Bereich 12 enthält in der dargestellten Ausführungsform eine muldenförmige Vertiefung 13, in die beim Einstecken des Verschluss-Stücks 8 in das Kupplungselement 7 ein nicht dargestellter Steg des Kupplungselements mit entsprechender Querschnittsform und Breite eingreift. Die Vertiefung bzw. Nut 13 und der Steg bilden Mittel zur glatten, verdrehsicheren Führung des Verschluss-Stücks 8 beim Einstecken in das Kupplungselement 7.

In diesem Zusammenhang sei erwähnt, dass auch andere zusammenwirkende Führungsmittel an dem Verschluss-Stück 8 und dem Kupplungselement 7 ausgebildet sein können, die die Verdrehsicherung gewährleisten können.

Die lamellenartigen Vorsprünge 11 haben in der dargestellten Ausführungsform eine sägezahnartige Querschnittsform, ebenso wie die zugehörigen Nuten 14 bzw. die Nuten begrenzenden Vorsprünge 15 an der Innenseite des Aufnahmeraums 16 des Kupplungselementes 7.

Das Verschluss-Stück 8 hat an seinem freien Endbereich eine konisch zulaufende glatte Umfangsfläche 17, die frei von lamellenartigen Vorsprüngen ist. Der Aufnahmeraum 16 des Kupplungselementes 7 hat eine entsprechend konische Innenfläche 18, die etwas kürzer als die konische Fläche 17 ist und an die sich eine im wesentlichen zylindrische Innenkontur 19 anschließt, in der ein 0-Dichtungsring 20 (Figur 1) zusammen gedrückt wird, wenn das Verschluss-Stück 8 in das Kupplungselement 7 bis in die Endposition eingesteckt wird. Dabei wird durch die glatte Führung des Verschluss-Stücks 8 der O-Dichtungsring 20 gleichmäßig über seinen gesamten Umfang gepresst, so dass hier eine perfekte Abdichtung erfolgt.

Die lamellenartigen Vorsprünge des Verschluss-Stücks 8 und die zugehörigen Rastelemente des Kupplungselementes 7 müssen sich nicht über den gesamten zylindrischen Abschnitt erstrecken, wie dies in Figur 2 dargestellt ist, sondern die Rastvorsprünge können auch nur über eine kürzere Strecke ausgebildet sein. Die Verrastung mit gleichzeitiger verdrehsicherer Führung erfolgt auf dieselbe Weise bei dem aus einem Nippelelement und einem zugehörigen Verschluss-Stück zusammen gesetzten Nippelteil, so dass hier auf deren Beschreibung verzichtet werden kann.

Das Verschluss-Stück 8 der Figur 3 ist mit einem Befestigungsbund 21 versehen, der Löcher 22 zum Durchgriff von Befestigungsschrauben aufweist, mit denen die Kupplungseinheit an einer geeigneten Halterung fixierbar ist.

## Patentansprüche

1. Kupplungseinheit, bestehend aus einem Nippelteil und einem Kupplungsteil, einer Anordnung zum Abzweigen einer Flüssigkeit aus einem Rohr oder einer stationären Einheit oder zum Zuführen bzw. zur Entnahme einer Flüssigkeit aus einer flexiblen Schlauchverbindung in ein Rohr oder in eine stationäre Einheit, oder in eine weitere flexible Schlauchverbindung, wobei ein Teil der Kupplungseinheit mit einem Abschnitt in einem Rohr oder in einer stationären Einheit befestigt ist, wobei in dem Nippelteil und dem Kupplungsteil jeweils ein von einer Feder in die Verschlussstellung vorgespannter Ventilkörper verschieblich gehalten ist,
wobei ferner das Nippelteil aus einem Nippelelement und einem eingesteckten Verschluss-Stück und das Kupplungsteil aus einem Kupplungselement und einem eingesteckten weiteren Verschluss-Stück zusammengesetzt und dabei verrastet sind, wodurch deren axialer Zusammenhalt fixiert ist, und wobei jeweils ein 0-Dichtungsring zwischen den eingesteckten Verschluss-Stücken und dem Nippelelement bzw. dem Kupplungselement angeordnet ist,
**dadurch gekennzeichnet,**
**dass** an den Verschluss-Stücken (6,8), dem Kupplungselement (7) und an dem Nippelelement (5) in Umfangsrichtung verlaufende querschnittlich im wesentlichen dachförmige oder im wesentlichen sägezahnförmige Vorsprünge (11, 14) ausgebildet sind, die sich um einen Teil des gesamten Umfangs der Verschluss-Stücke (6,8), des Kupplungselements (7) und des Nippelelements (5) erstrecken und beim Einsteckvorgang elastisch verformt werden und hintereinander einrasten, und
**dass** wenigstens ein Umfangsabschnitt (12) der Verschluss-Stücke (6,8), des Kupplungselements (7) und des Nippelelements (5) frei von den dachförmigen oder sägezahnförmigen Vorsprüngen (11,14) ist und Führungsmittel (13) zum verdrehsicheren Einsteckvorgang aufweist.

2. Kupplungseinheit nach Anspruch 1,
**dadurch gekennzeichnet,**
**dass** die Führungsmittel (13) wenigstens eine axiale Nut und wenigstens einen in die Nut passenden Steg aufweisen, die im wesentlichen dieselbe Breite haben.

3. Kupplungseinheit nach Anspruch 2,
**dadurch gekennzeichnet,**
**dass** jeweils zwei Führungsmittel ausgebildet sind.

4. Kupplungseinheit nach den Ansprüchen 1 bis 3,
**dadurch gekennzeichnet,**
**dass** der freie Endabschnitt (17) der Verschluss-Stücke (6,8) ohne Vorsprünge (11) ist und sich konisch nach vorn verengt und dass der zugehörige Innenraum (16) des Kupplungselements (7) und des Nippelelementes eine kürzere konische Gegenfläche (18) und eine anschließende erweitere, vorzugsweise zylindrische Kontur (19) zur Aufnahme des O-Dichtungsrings (20) aufweist.

5. Kupplungseinheit nach den Ansprüchen 1 bis 4,
**dadurch gekennzeichnet,**
**dass** der 0-Dichtungsring (20) einen kleineren Außendurchmesser hat als die Vorsprünge (11, 14).

## Claims

1. A coupling unit consisting of a nipple portion and a coupling portion, a device for branching a liquid off from a pipe or a stationary unit or for supplying or removing a liquid from a flexible hose connection into a pipe or into a stationary unit or into a further flexible hose connection, wherein a portion of the coupling unit is fastened with a section in a pipe or in a stationary unit, wherein movably retained in the nipple portion and in the coupling portion there is a respective valve body biased by a spring into the closed position, wherein further the nipple portion consists of a nipple element and an inserted locking piece and the coupling portion consists of a coupling element and an inserted, further locking piece and they are thereby latched, whereby their axial cohesion is fixed and wherein O sealing rings are arranged between the inserted locking pieces and the nipple element and coupling element, respectively, **characterised in that** formed on the locking pieces (6, 8), the coupling element (7) and on the nipple element (5) there are projections (11, 14) which extend in the circumferential direction and in cross-section are substantially roof-shaped or substantially sawtooth-shaped and which extend around a portion of the entire periphery of the locking pieces (6, 8), of the coupling element (7) and of the nipple element (5) and, during the insertion process, are elastically deformed and latch behind one another and that at least one circumferential section (12) of the locking pieces (6, 8), of the coupling element (7) and of the nipple element (5) is free of the roof-shaped or sawtooth-shaped projections (11, 14) and includes guide means (13) for the rotationally fixed insertion process.

2. A coupling unit as claimed in Claim 1, **characterised in that** the guide means (13) include at least one axial groove and at least one web fitting into the groove, which have substantially the same breadth.

3. A coupling unit as claimed in Claim 2, **characterised in that** in each case two guide means are present.

4. A coupling unit as claimed in Claims 1 to 3, **characterised in that** the free end section (17) of the locking pieces (6, 8) has no projections (11) and tapers conically in the forward direction and that the associated internal space (16) in the coupling element (7) and the nipple element has a relatively short conical opposing surface (18) and an adjacent relatively broad, preferably cylindrical, contour (19) for receiving the O sealing ring (20).

5. A coupling unit as claimed in Claims 1 to 4, **characterised in that** the O sealing ring (20) has a smaller external diameter than the projections (11, 14).

## Revendications

1. Unité de couplage, constituée d'une partie de raccord et d'une partie de couplage, d'un ensemble servant à dévier un liquide d'un tube ou d'une unité stationnaire ou servant à amener ou à retirer un liquide d'un raccord tubulaire flexible dans un tube ou dans une unité stationnaire, ou dans un autre raccord tubulaire flexible, sachant qu'une partie de l'unité de couplage est fixée par une section dans un tube ou dans une unité stationnaire, sachant qu'un corps de soupape précontraint par un ressort dans une position de fermeture est respectivement maintenu dans la partie de raccord et dans la partie de couplage,
sachant en outre que la partie de raccord est composée d'un élément de raccord et d'une pièce de fermeture emboîtée et que la partie de couplage est composée d'un élément de couplage et d'une autre pièce de fermeture emboîtée, lesquelles sont dans ce cadre enclenchées, ce qui permet de fixer leur maintien axial, et dans lesquelles, respectivement, un joint torique est inséré entre les pièces de fermeture emboîtées et l'élément de raccord ou l'élément de couplage,
**caractérisée en ce que**
des parties faisant saillie (11, 14) s'étendant dans le sens de la périphérie, présentant une section transversale essentiellement en forme de toit ou présentant essentiellement une forme en dent de scie sont réalisées au niveau des pièces de fermeture (6, 8), de l'élément de couplage (7) et au niveau de l'élément de raccord (5), lesquelles s'étendent autour d'une partie de l'ensemble des pièces de fermeture (6, 8), de l'élément de couplage (7) et de l'élément de raccord (5) et qui se déforment de manière élastique lors de l'emboîtement et s'enclenchent les une derrière les autres, et
**en ce qu'**au moins une section périphérique (12) des pièces de fermeture (6, 8), de l'élément de couplage (7) et de l'élément de raccord (5) est dépourvue de parties faisant saillie (11, 14) présentant une forme de toit ou une forme de dents de scie et présente des moyens de guidage (13) permettant l'emboîtement bloqué en rotation.

2. Unité de couplage selon la revendication 1,
**caractérisée en ce que**
les moyens de guidage (13) présentent au moins une rainure axiale et au moins une traverse passant dans la rainure, lesquelles présentent essentiellement la même largeur.

3. Unité de couplage selon la revendication 2,
**caractérisée en ce que**
respectivement deux moyens de guidage sont réalisés.

4. Unité de couplage selon les revendications 1 à 3,
**caractérisée en ce que**
la section d'extrémité (17) libre des pièces de fermeture (6, 8) est sans partie faisant saillie (11) et se rétrécit de manière conique vers l'avant, et **en ce que** l'espace intérieur (16) associé de l'élément de couplage (7) et de l'élément de raccord présente une surface complémentaire (18) conique plus courte et un contour (19) élargi dans le prolongement, de préférence cylindrique, servant à recevoir le joint torique (20).

5. Unité de couplage selon les revendications 1 à 4,
**caractérisée en ce que**
le joint torique (20) a un diamètre extérieur de plus petite taille que les parties faisant saillie (11, 14).
